# EUROPÄISCHE PATENTANMELDUNG

(11) **EP 2 133 683 A1**
(43) Veröffentlichungstag der Anmeldung: **16.12.2009**
(21) Anmeldenummer: 08724077.6
(22) Anmeldetag: 01.02.2008
(51) Int. Cl.: G01N 1/28, G02B 21/34, G01N 1/31

(54) **VORRICHTUNG ZUR PLATZIERUNG HISTOLOGISCHER UND BIOLOGISCHER PROBEN**

(30) Priorität: 09.02.2007 RU 2007105906
(71) Anmelder: Izvozchikov, Iliya Borisovich, St. Petersburg, 194223 (RU)
(72) Erfinder: KURAPOV, Anatoliy Ivanovitch, St.Petersburg, 195274 (RU)
(74) Vertreter: Weber, Walter
(86) Internationale Anmeldenummer: PCT/RU2008/000070
(87) Internationale Veröffentlichungsnummer: WO 2008/097137

(57) **Zusammenfassung**

Die Vorrichtung für den Einschluss umfasst einen Arbeitsbereich, ein Behältnis für Abdeckgläser mit einem Schlitz im unteren Teil, einen Stößel der Abdeckgläser, welcher in Form einer Platte ausgeführt ist, deren Dicke kleiner ist als die Dicke des Abdeckglases, ein Mittel zum Ablegen des Abdeckglases, das in der Lage ist, eine Hin- und Herbewegung über dem Arbeitsbereich auszuführen, und eine Presse, die verbunden ist mit einem Antrieb für die Hin- und Herbewegung des Mittels zum Ablegen des Abdeckglases. Das Mittel ist in Form mindestens einer abgefederten schmalen Platte oder Nadel ausgeführt, die eine Länge aufweist, die größer ist als die Breite des Stößels, und die unmittelbar unter dem Stößel des Abdeckglases in einer Halterung mit ihm angeordnet ist. Die Halterung ist mit dem Antrieb der Hin-und Herbewegung in der Richtung senkrecht zum Arbeitsbereich verbunden und stellt einen Schlitten dar. Auf dem Schlitten sind auch Führungen für das Absenken und Anheben der Presse angeordnet. Die Presse ist in Form mindestens eines elastischen Andrückelements ausgeführt, das an einem Hebel befestigt ist. Der Hebel weist einen seitlichen Anschlag auf, der in einem Kontakt mit den Führungen auf dem Schlitten angeordnet ist.

## Beschreibung

Die Erfindung betrifft die Medizin und die Biologie, insbesondere Werkzeuge für mikroskopische Untersuchungen und die Diagnostik, und zwar Vorrichtungen für den Einschluss histologischer und biologischer Proben in ein optisches Medium für eine anschließende mikroskopische Untersuchung.

Die vorbehandelten und eingefärbten histologischen und biologischen Proben werden in speziellen Medien angeordnet (eingeschlossen), um ein optisch homogenes Medium zu erzeugen und sie über einen Zeitraum hinweg zu konservieren, der für die Untersuchung benötigt wird. Als optische Medien werden verschiedene Substanzen verwendet, zum Beispiel Kanadabalsam, Cedax oder Polystyrol. Auf die Probe, die auf einem Objektglas angeordnet ist, wird ein Tropfen (einige Tropfen) der Lösung einer der angegebenen Substanzen in einem geeigneten Lösungsmittel aufgetragen und mit dem Abdeckglas abgedeckt. Nach dem Austrocknen des Lösungsmittels können die im optischen Medium eingeschlossenen Proben ohne Veränderungen für mehrere Jahre aufbewahrt werden.

In Großlaboratorien, die sich auf histologische und biologische Untersuchungen spezialisieren, in denen täglich hunderte von Schnitten (Proben) bearbeitet werden, werden für das Einschließen hochleistungsfähige Vorrichtungen verwendet.

### STAND DER TECHNIK

Die Vorrichtung für den Probeneinschluss Consul der englischen Firma Shandon (Shandon Consul. A versatile automatic coverslipper. Prospekt der Firma Shandon Life Sciences Intern. Ltd.) umfasst einen Speicherbehälter für die Abdeckgläser mit einem Stößel für das Herauslegen der Abdeckgläser, einen Objektglashalter, eine Dosiereinrichtung der Lösung des optischen Mediums und eine Walzbaugruppe.

Der Objektglashalter wird durch Halbrahmen gebildet, die an einem Stab befestigt sind, wobei es möglich ist, eine Drehung in der Ebene senkrecht zum Stab auszuführen. Die Walzbaugruppe in der Vorrichtung Consul wird durch einen kleinen Tisch und zwei Rollen gebildet, die in der Ausgangslage unterhalb des Abdeckglases angeordnet sind. Der kleine Tisch kann gemeinsam mit den Rollen senkrecht zur Ebene des Abdeckglases bewegt werden, und die Rollen sind auch dazu in der Lage, gemeinsam mit abgefederten Schubstangen ausgelenkt zu werden.

Die Objektgläser werden auf einer Stange angeordnet, die vertikal verschoben wird. Das Objektglas wird mithilfe einer Drehvorrichtung in den Arbeitsbereich befördert. Der Speicher der Abdeckgläser ist wie auch das Dosierungssystem für die technologische Lösung auf einem Gestell angeordnet.

Die Vorrichtung Consul arbeitet folgendermaßen:

Der Stößel der Abdeckgläser befördert das untere Glas aus dem Speicherbehälter in den Arbeitsbereich, indem er sich längs der Führungen bewegt. Von oben gelangt die Dosis der Lösung des optischen Mediums auf das Abdeckglas. Die Drehvorrichtung dreht den Halbrahmen mit dem Objektglas um die Stange und befördert das Objektglas derart in den Arbeitsbereich, dass es über dem Abdeckglas mit der Probe nach unten angeordnet wird. Der kleine Tisch der Walzbaugruppe nähert durch Anheben das Abdeckglas dem Objektglas an. Der Stößel der Walzbaugruppe fährt mit dem Anheben der Rollen fort, bis diese das Abdeckglas berühren, worauf dann die Auslenkung der abgefederten Schubstangen beginnt und die Rollen auf der Oberfläche des Abdeckglases abrollen. Auf diese Weise wird der Mittelteil des Abdeckglases durch den kleinen Tisch angepresst und die Seitenteile werden durch die Rollen gewalzt. Danach entfernt sich die Walzbaugruppe durch Absenken von den Gläsern, und die Drehvorrichtung bringt den Halbrahmen mit dem eingelagerten Objektglas in die Ausgangslage zurück.

Die Vorrichtung Consul erlaubt es, bis zu 400 Proben pro Stunde einzuschließen; die hohe Leistungsfähigkeit erlaubt ihren erfolgreichen Einsatz in Laboratorien, die sich auf pathohistologische Untersuchungen spezialisieren.

Ein Mangel der Vorrichtung Consul ist die horizontale Lage der Abdeck- und Objektgläser zum Zeitpunkt des Zusammenpressens, durch welche es erschwert wird, die Luftbläschen herauszutreiben, die sich im optischen Medium ausbilden.

Die Vorrichtung für den Einschluss von Proben gemäß US-Patentschrift Nr. 4428793, MKI³ (Internationale Erfindungsklassifikation) B65C 9/08, veröffentlicht am 31.01.1984, umfasst einen Speicherbehälter für die Abdeckgläser, einen kleinen Tisch zum Anordnen der Objektgläser und ein Mittel zum Herausziehen des Abdeckglases aus dem Speicherbehälter, zu seinem Verschieben zum kleinen Tisch hin, auf dem das Objektglas angeordnet ist, und zum Absenken des Abdeckglases auf das Objektglas, um die histologische Probe einzuschließen. Das angeführte Mittel besteht in einem Halter, auf dem eine Vakuumsauganlage und ein abgefederter Stößel angeordnet sind, wobei die Ansauganlage höher als der Stößel liegt. Die Vorrichtung wird vertikal in den Speicherbehälter der Abdeckgläser derart abgesenkt, dass die Ansauganlage das Abdeckglas erfasst; dabei wird die Feder des Stößels zusammengedrückt und er befindet sich auf einer Höhe mit der Ansauganlage. Nach dem Herausziehen des Abdeckglases aus dem Speicherbehälter entspannt sich die Feder des Stößels, wobei die Kante des Abdeckglases abgesenkt wird. Bedingt durch die unterschiedlichen Höhenlagen der Ansauganlage und des Stößels trägt das Mittel das Abdeckglas in einem Winkel zur Horizontalen zum kleinen Tisch mit dem Objektglas hinüber. Das Mittel senkt das Abdeckglas mit dem unteren Ende auf die Kante des Objektglases herab, auf dem ein Tropfen oder ein Streifen des Mediums zum Einschließen angeordnet ist. Der Stößel hält das Abdeckglas fest, solange das Mittel abgesenkt wird. Die Feder des Stößels wird dabei so lange zusammengedrückt, bis sich die Ansauganlage und der Stößel auf einer Horizontalen befinden, danach wird die Vakuumansauganlage vom Abdeckglas abgetrennt. Auf diese Weise wird das Abdeckglas allmählich unter einem Winkel auf das Objektglas abgesenkt, was dazu beiträgt, das Medium von Luftbläschen zu befreien.

Ein Nachteil der bekannten Vorrichtung besteht darin, dass ein einzelnes Abdeckglas, dessen Höhe 0,06 - 0,25 mm nicht überschreitet, mit Mühe von dem Glasstapel im Speicherbehälter abgehoben werden kann, umso mehr als bei jedem Abheben mithilfe der angegebenen Vorrichtung der Abdeckglasstapel durch den abgefederten Stößel zusammengedrückt wird. Außerdem kann das Festhalten des Abdeckglases durch den abgefederten Stößel während dessen Ablegens auf dem Objektglas bei dem Kraftaufwand, der für das Zusammendrücken der Feder nötig ist, zu einer Beschädigung der histologischen Probe führen.

Die Vorrichtung zum Entnehmen und Ablegen von Abdeckgläsern gemäß US-Patentschrift Nr. 5989386, MKI⁶ B32 B31/04, veröffentlicht am 23.11.1999, umfasst ein Kopfteil, an dessen einem Ende zwei Vakuumansauganlagen auf Ebenen angeordnet sind, die in einem Winkel zueinander liegen. Zwischen den Ansauganlagen ist ein abgefederter Kolben angeordnet, der durch ein Solenoid gesteuert werden kann und in der Lage ist, sich nach oben und unten zu bewegen. In der eingefahrenen Stellung kann der Kolben das Abdeckglas nicht berühren. Das Kopfteil umfasst auch einen abgefederten Hebel, der am anderen Ende des Kopfteils hinter den Ansauganlagen und dem Kolben angeordnet ist. Die Vorrichtung arbeitet folgendermaßen. Das Kopfteil wird so lange in den Speicherbehälter für die Abdeckgläser hinein abgesenkt, bis es mit dem Kolben das obere Glas berührt, wonach die Ansauganlagen das obere Glas erfassen. Durch die Einwirkung der Kolbenfeder und durch die Winkelorientierung der Ansauganlagen biegt sich das erfasste Abdeckglas durch und wird vom Glasstapel abgelöst. Das Kopfteil trägt das Abdeckglas zum Objektglas hinüber. Das Ende des Abdeckglases, das dem von den Ansauganlagen erfassten Ende gegenüberliegt, wird durch den Hebel derart nach unten abgesenkt, dass das Abdeckglas unter einem Winkel zur Horizontalen auf das Objekt abgesenkt wird. Das Kopfteil bewegt sich bis zu dem Moment nach unten, in dem das Ende des Abdeckglases, das von den Ansauganlagen erfasst ist, auf dem Objektglas aufliegt. Der Hebel, der am Kopfteil so befestigt ist, das er eine Bewegung im und gegen den Uhrzeigersinn ausführen kann, legt das Abdeckglas auf das Objektglas, wonach dann die Ansauganlagen abgetrennt werden.

Die Vorrichtung gemäß US-Patentschrift Nr. 5989386 ist dafür vorgesehen, "einen großen Prozentsatz freier Abdeckgläser" zu entnehmen, die Praxis zeigt jedoch, dass die Vakuumansauganlagen nicht jedes Mal ein freies Glas ablösen können und dass die Abdeckgläser aus dem Behälter mit anderen Hilfsmitteln herausgestoßen werden müssen, wonach sie dann mithilfe der Ansauganlagen erfasst werden können. Der Einsatz des abgefederten Kolbens und des Hebels kann bei der angegebenen Vorrichtung wie auch bei der Vorrichtung gemäß US-Patentschrift Nr. 4428793 zu einer Beschädigung der histologischen Probe führen.

Die Vorrichtung für den Einschluss histologischer Proben gemäß US-Patentschrift Nr. 6474386, MKI⁷ B65 H29/24, veröffentlicht am 05.11.2002, erlaubt es, die Luft aus dem Raum zwischen dem Abdeck- und dem Objektglas sorgfältig zu entfernen. Die angegebene Vorrichtung umfasst eine Plattform für das Objektglas und ein Mittel für das Aufnehmen und die Schrägablage des Abdeckglases auf dem Objektglas. Das Mittel zum Aufnehmen und Ablegen des Abdeckglases umfasst einen Zylinder, der an einem vertikalen, neben der Plattform angeordneten Ständer montiert ist, welcher mit einem Motor ausgerüstet und in der Lage ist, sich am Ständer nach oben und unten zu bewegen. An dem Zylinder ist auch ein mit einem besonderen Motor versehener Schaft befestigt, der Bewegungen in und entgegen dem Uhrzeigersinn ausführen kann. An dem freien Ende des Schafts ist eine Vakuumansauganlage befestigt, die mit einer Vakuumpumpe verbunden ist. Der Schaft kann die Vakuumansauganlage anheben und sie bis zu der Höhenlage absenken, bei der sich das erfasste Abdeckglas in einer horizontalen Lage befindet.

Die Vorrichtung gemäß US-Patentschrift Nr. 6474386 arbeitet auf die folgende Weise.

Das Objektglas mit der histologischen Probe und dem aufgetragenen Fleck des Einschlussmediums wird auf der Plattform angeordnet. Das Mittel zum Erfassen mithilfe der Ansauganlage erfasst das Abdeckglas an dem einen Ende und ordnet es über dem Objektglas derart an, dass das erfasste Ende höher liegt als das freie Ende. Danach wird der Zylinder nach unten bis zu der Höhenlage bewegt, in der sich die horizontale Achse der Schafthalterung unterhalb des auf der Plattform angeordneten Objektglases befindet. In dieser Lage berührt das untere Ende des Abdeckglases den Rand des Objektglases unter einem spitzen Winkel zur Horizontalen. Der Schaft wird durch den Motor entgegen dem Uhrzeigersinn gedreht, und das Abdeckglas, das von der Ansauganlage gehalten wird, wird gleichmäßig auf das Objektglas gelegt, wonach die Ansauganlage abgetrennt wird. Es zeigt sich, dass die Vorrichtung ein Einschließen der histologischen Probe ohne eine Beschädigung ermöglicht.
Ein Mangel der angegebenen Vorrichtung besteht in dem Aufnehmen des Abdeckglases mithilfe einer Vakuumansauganlage. Eine derartige Konstruktion erfordert eine Vakuumpumpe und eine hinreichend komplizierte Steuerung, was die Vorrichtung schwerer macht und ihre Herstellung verteuert.

Die Vorrichtung für den Einschluss histologischer und biologischer Proben [WO 2004/077051, MKI⁷ G01N33/48, veröffentlicht am 10.09.2004] umfasst einen Arbeitsbereich, ein Behältnis für Abdeckgläser mit einem Schlitz im unteren Teil des Behältnisses, einen Stößel der Abdeckgläser, welcher in Form einer Platte ausgeführt ist, deren Dicke geringer als die Dicke des Abdeckglases ist, ein Mittel zum Ablegen des Abdeckglases, das in der Lage ist, eine Hin-und Herbewegung über dem Arbeitsbereich auszuführen, und eine Presse, die verbunden ist mit einem Antrieb für die Hin- und Herbewegung des Mittels zum Ablegen des Abdeckglases. Das Mittel ist in Form eines Kamms ausgeführt; der Arbeitsbereich (die Plattform für das Anordnen des Objektglases) ist seitens des Mittels zum Ablegen durch einen vertikalen Anschlag mit Schlitzen begrenzt, in welche die Zähne des Kamms eingreifen; die Presse ist in Form eines Zylindersegments oder in Form einer Walze ausgeführt.

Die Vorrichtung gemäß WO 2004/077051 arbeitet auf die folgende Weise.

Auf der Plattform wird das Objektglas mit der histologischen Probe angeordnet, auf das ein Fleck (Streifen) des Einschlussmediums aufgebracht wurde. Der Kamm (Mittel zum Ablegen) wird über dem Objektglas angeordnet, und auf dieses wird das Abdeckglas durch den Stößel aus dem Behältnis herausbewegt. Das Abdeckglas wird unter einem Winkel auf das Objektglas herabgesenkt, indem der Kamm allmählich aus dem Raum zwischen dem Objektglas und dem Abdeckglas herausgezogen wird. Gleichzeitig mit der Bewegung des Kamms wird die Presse in Betrieb genommen, welche das Abdeckglas an das Objektglas anpresst.

Die Vorrichtung gemäß WO 2004/077051 ermöglicht es, histologische Proben ohne Luftbläschen und ohne Zerstörung des Probengewebes einzuschließen, und sie erfordert keine pneumatischen und evakuierenden Vorrichtungen, welche die Steuerung erschweren. Sie weist jedoch die folgenden Nachteile auf.

Der Zugang in den Arbeitsbereich für die Reinigung und andere Wartungsoperationen wird dadurch erschwert, dass über ihr ein Kamm und eine Presse mit einem Übertragungssystem angeordnet sind. Für die Wartung des Arbeitsbereichs muss der gesamte Überbau zerlegt werden. Außerdem gewährleistet ein vertikaler Anschlag mit Schlitzen nicht die genaue Anordnung des Abdeckglases auf dem Objektglas, da sich die Abdeckgläser verschiedener Hersteller in der Breite ein wenig unterscheiden. Das Glas "hat ein Spiel", was Probleme bei der weiteren Arbeit mit den eingeschlossenen Proben hervorruft.

### KURZDARSTELLUNG DER ERFINDUNG

Der Erfindung liegt die Aufgabenstellung zugrunde, die Wartung des Geräts durch eine Erleichterung des Zugriffs auf den Arbeitsbereich zu vereinfachen.

Der Erfindung liegt auch die Aufgabenstellung zugrunde, die Genauigkeit der Anordnung des Abdeckglases auf dem Objektglas zu erhöhen.

Erfindungsgemäß wird eine Vorrichtung für den Einschluss histologischer und biologischer Proben vorgeschlagen mit einem Arbeitsbereich, einem Behältnis für Abdeckgläser mit einem Schlitz im unteren Teil, einem Stößel für die Abdeckgläser, der in Form einer Platte ausgeführt ist, deren Dicke geringer ist als die Dicke des Abdeckglases, einem Mittel zum Ablegen des Abdeckglases, das in der Lage ist, eine Hin- und Herbewegung über dem Arbeitsbereich auszuführen, und einer Presse, die verbunden ist mit einem Antrieb für die Hin- und Herbewegung des Mittels zum Ablegen des Abdeckglases. Das Mittel zum Ablegen des Abdeckglases ist in Form mindestens einer abgefederten schmalen Platte oder Nadel ausgeführt, die eine Länge aufweist, die größer ist als die Breite des Stößels, und die unmittelbar unter dem Stößel des Abdeckglases in einer Halterung mit ihm angeordnet ist. Die Halterung ist verbunden mit dem Antrieb der Hin- und Herbewegung in der Richtung senkrecht zum Arbeitsbereich. Der Antrieb der Hin- und Herbewegung ist ein Schlitten, auf dem auch Führungen für das Absenken und Anheben der Presse angeordnet sind, die in Form mindestens eines elastischen Andrückelements ausgeführt ist, das an einem Hebel befestigt ist. Der Hebel weist einen seitlichen Anschlag auf, der in einem Kontakt mit den Führungen auf dem Schlitten angeordnet ist.

Das Mittel zum Ablegen des Abdeckglases kann in Form von zwei oder mehreren abgefederten schmalen Platten oder Nadeln ausgeführt sein, die unter dem Stößel in einer Halterung mit ihm angeordnet sind.

Die Länge der schmalen Platte oder Nadel soll die Breite des Stößels um mehr als ein Drittel der Breite des Abdeckglases, jedoch um nicht mehr als die Breite des Abdeckglases überschreiten.

Im Arbeitsbereich kann zusätzlich eine Oberfläche angeordnet sein, welche das Objektglas gegenüber einem übermäßigen Absenken schützt.

### KURZBESCHREIBUNG DER FIGURENZEICHNUNGEN

Die anzumeldende Vorrichtung kann mit Bezugnahme auf die Zeichnungen beschrieben werden, die in den Fig. 1-10 dargestellt sind.

In Fig. 1 ist die anzumeldende Vorrichtung dargestellt.

In Fig. 2 - 4 ist die anzumeldende Vorrichtung im Verlauf des Probeneinschlusses dargestellt.

In Fig. 5 ist eine vergrößerte Darstellung des Einschließsystems zum Zeitpunkt des Herausbewegens des Abdeckglases aus dem Behältnis (entspricht der Position von Fig. 2) dargestellt.

In Fig. 6 - 10 ist die Bewegung des Pressanschlages längs der Führungen beim Arbeitsprozess der Vorrichtung dargestellt.

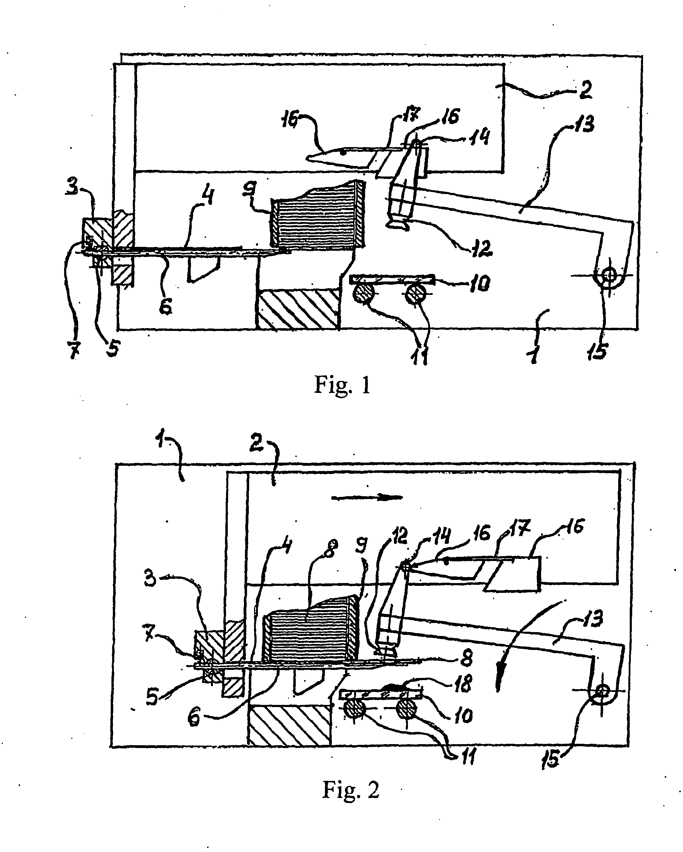

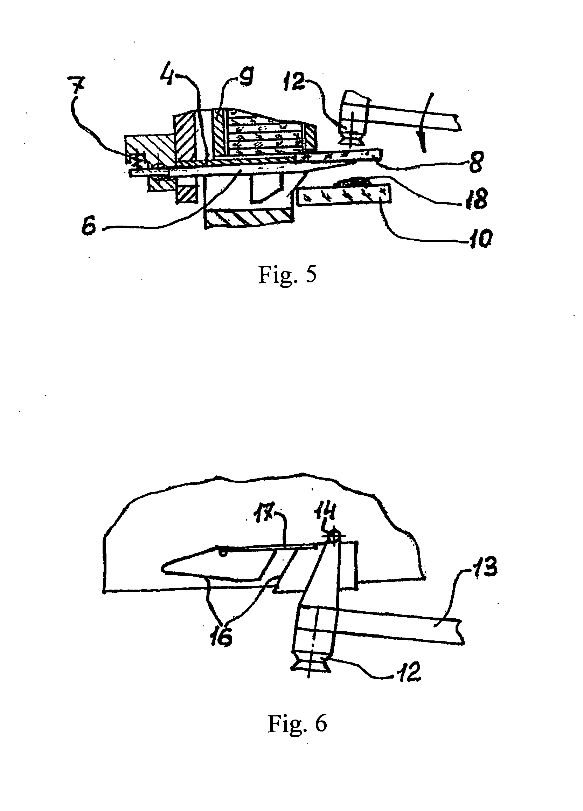

Ein Schlitten 2, der ein Antrieb für die Hin- und Herbewegung ist, ist an einer Gehäusewand 1 (Fig. 1 - 4) mit der Möglichkeit einer horizontalen Lageveränderung entlang der Wand 1 angeordnet. Mit dem Schlitten 2 ist eine Halterung 3 verbunden, in der die Basis eines Stößels 4 des Abdeckglases und eine Drehachse 5 eines in Form einer schmalen Platte oder Nadel 6 ausgeführten Mittels für das Ablegen des Abdeckglases befestigt sind. Die obere Fläche der Platte oder Nadel 6 berührt die untere Fläche des Stößels 4; die Länge der Platte oder Nadel 6 ist mindestens um ein Drittel der Breite des Abdeckglases breiter als der Stößel 4. Die Platte oder Nadel 6 wird durch eine Feder 7 abgefedert. Die Abdeckgläser 8 sind in einem Behältnis 9 der Abdeckgläser untergebracht. Das Objektglas 10 mit der histologischen oder biologischen Probe befindet sich im Arbeitsbereich der Vorrichtung, in der es eine Sicherungsfläche 11 gibt, die in Form paralleler Stäbe oder einer Schleife oder eines Gitters ausgeführt ist. Eine Presse, die (ein) elastische(s) Andrückelement(e) 12 umfasst, die (das) auf einem Hebel 13 angeordnet sind (ist), weist einen Seitenanschlag 14 auf; der Hebel ist durch eine Befestigung 15 drehbar an der Gehäusewand 1 angeordnet. Die Presse kann 1 - 3 elastische Andrückelemente 12 umfassen; falls mehr als ein Andrückelement vorhanden ist, werden sie in einer Reihe an der Platte befestigt. Der Seitenanschlag 14 erreicht die Oberfläche des Schlittens 2. Auf dem Schlitten 2 sind Führungen 16 angeordnet, die in Form zweier krummliniger Flächen ausgeführt sind. Die Führungen 16 sind auf dem Schlitten 2 mit einem Spalt angeordnet und durch eine abgefederte Platte 17 verbunden. Im Ruhezustand wird der Anschlag 14 der Presse zum Oberteil der Führungen 16 hin verschoben (s. Fig. 6).

Das Mittel zum Ablegen der Abdeckgläser kann in Form einer schmalen Platte oder Nadel ausgeführt sein; es können jedoch mehrere schmale Platten oder Nadeln vorhanden sein. Im letzteren Fall werden einige schmale Platten oder Nadeln auf der Drehachse 5 und angeordnet und durch die Feder 7 abgefedert.

Die Vorrichtung arbeitet auf die folgende Weise.

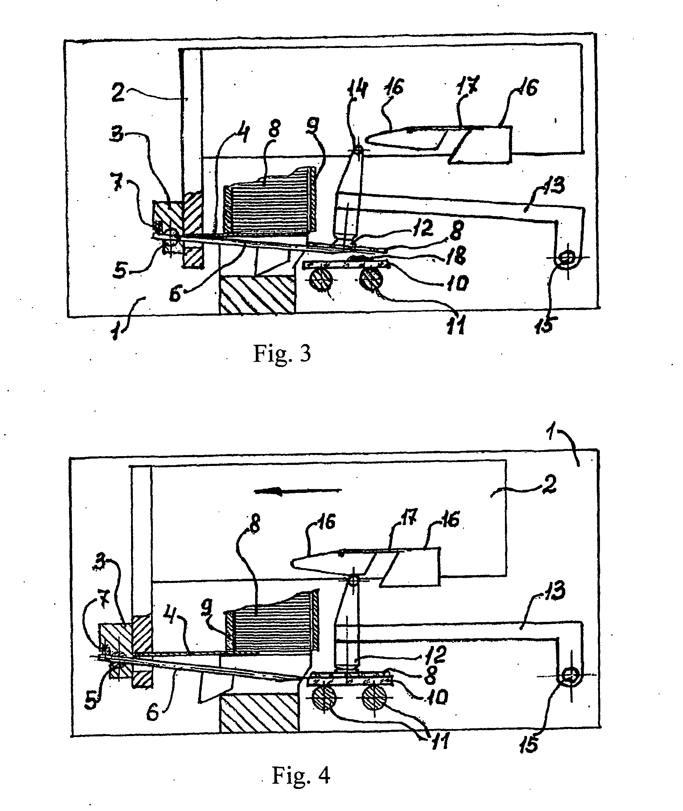

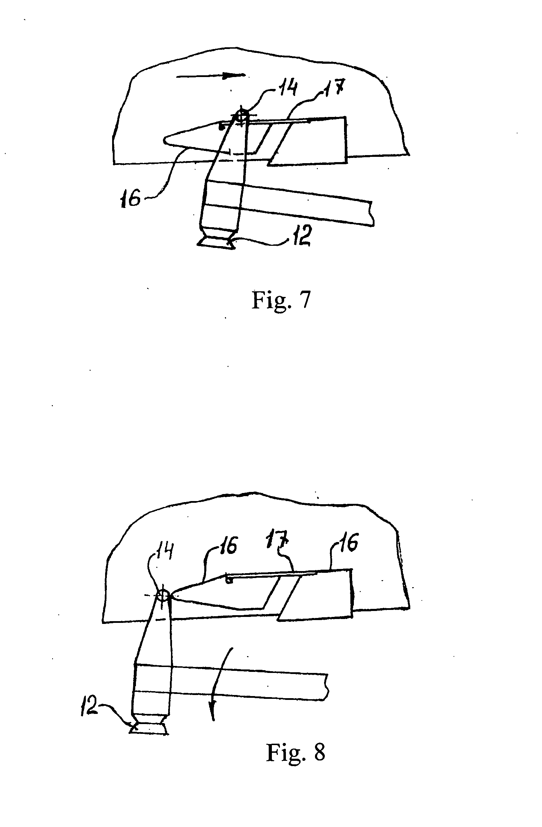

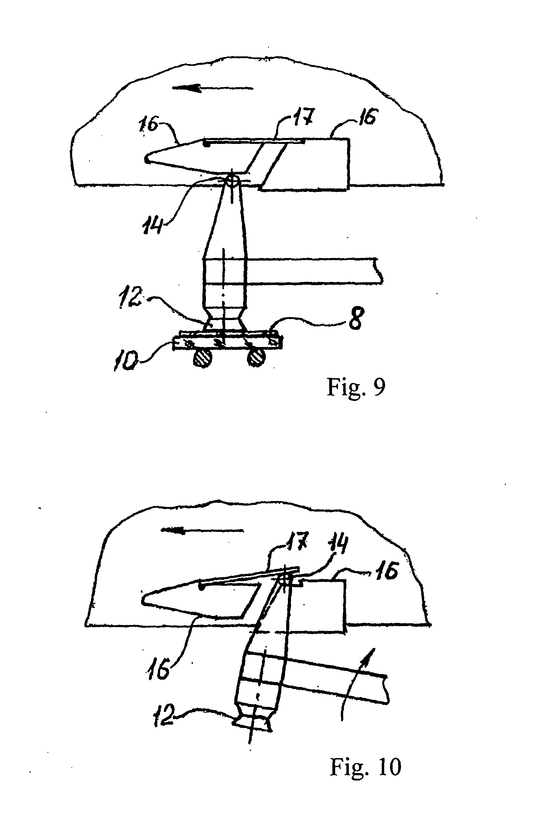

Das Objektglas 10 wird im Arbeitsbereich angeordnet. Gleichzeitig wird aus der Dosiereinrichtung (nicht dargestellt) ein Streifen 18 des Mediums für den Einschluss (zum Beispiel Lösung von Polystyrol in Xylol) auf das Glas 10 aufgebracht (s. Fig. 2). Bei einer Bewegung des Schlittens 2 nach rechts durch den Stößel 4 wird das Abdeckglas 8 aus dem Behältnis 9 auf die schmale Platte oder Nadel 6 so herausgestoßen, wie es in Fig. 5 dargestellt ist. Dabei wird das Abdeckglas 8 von unten durch die abgefederte Platte oder Nadel 6 und von oben durch die Kante der Wand des Behältnisses 9 in dieser Lage fixiert und genau über dem Objektglas angeordnet. Gleichzeitig gleitet bei einer Bewegung des Schlittens 2 nach rechts der Anschlag 14 der Presse entlang der Führungen 16 über die Platte 17 (Fig. 7), und indem er sich von den Führungen 16 herunterbewegt, ermöglicht er ein Absenken der Presse auf das Abdeckglas (Fig. 2 und 8). Mit ihrer Schwere lenkt die freigesetzte Presse das Abdeckglas 8 durch das Absenken der Platte oder Nadel 6 ab, die durch die Feder 7 abgefedert ist und die sich an der Achse 5 dreht (Fig. 3). Das Abdeckglas 8 senkt sich auf das Objektglas 10 unter einem Winkel seitlich von dem Streifen 18 des Einschlussmediums. Nachdem sich Abdeck-und Objektglas berührt haben, bewegt sich der Schlitten 2 nach links, die Platte oder Nadel 6 bewegt sich unter dem Abdeckglas hervor (Fig. 4 und 9) und kehrt danach durch die Feder 7 in die Ausgangslage zurück. Nach dem Zurückziehen der Platte oder Nadel 6 liegt das Abdeckglas auf dem Objektglas auf. Der Anschlag 14 kehrt bei der Bewegung des Schlittens 2 zwangsläufig durch den Spalt zwischen den Führungsflächen 16 zurück, wobei er die abgefederte Platte 17 (Fig. 10) derart in die Ausgangsstellung anhebt, wie in Fig. 6 dargestellt ist.

Die Arbeit der anzumeldenden Vorrichtung kann automatisiert werden. Der gesamte Einschließungszyklus beansprucht 7 - 9 Sekunden.

Die Wartung des Geräts ist einfach, der Arbeitsbereich ist zugänglich, wenn der Hebel der Presse an der Befestigung 15 zur Seite (nach rechts) gelegt wird. Die Anordnung des Stößels 4 und des Mittels zum Ablegen 6 im Verbund derart, wie sie in der Beschreibung und den Zeichnungen dargestellt ist, ermöglicht es, die Lage des Abdeckglases zu kontrollieren und es genau auf dem Objektglas abzulegen.

### INDUSTRIELLE ANWENDBARKEIT

Die anzumeldende Vorrichtung für den Einschluss histologischer und biologischer Proben kann in Laboratorien eingesetzt werden, die sich auf histologische Untersuchungen spezialisieren, aber auch in anderen biologischen und medizinischen Einrichtungen, die sich mit mikroskopischen Untersuchungen von Zellen und Geweben beschäftigen.

## Patentansprüche

1. Vorrichtung für den Einschluss histologischer und biologischer Proben, umfassend einen Arbeitsbereich, ein Behältnis für Abdeckgläser mit einem Schlitz im unteren Teil, einen Stößel für die Abdeckgläser, der in Form einer Platte ausgeführt ist, deren Dicke kleiner ist als die Dicke des Abdeckglases, ein Mittel zum Ablegen des Abdeckglases, das in der Lage ist, eine Hin- und Herbewegung über dem Arbeitsbereich auszuführen, und eine Presse, die verbunden ist mit dem Antrieb für die Hin- und Herbewegung des Mittels zum Ablegen des Abdeckglases, **dadurch gekennzeichnet, dass** das Mittel zum Ablegen des Abdeckglases in Form mindestens einer abgefederten schmalen Platte oder Nadel ausgeführt ist, die eine Länge aufweist, die größer ist als die Breite des Stößels, und die unmittelbar unter dem Stößel des Abdeckglases in einer Halterung mit ihm angeordnet ist, wobei die Halterung mit dem Antrieb der Hin-und Herbewegung in der Richtung senkrecht zum Arbeitsbereich verbunden ist, welcher ein Schlitten ist, auf dem auch Führungen für das Absenken und Anheben der Presse angeordnet sind, die in Form mindestens eines elastischen Andrückelements ausgeführt ist, das an einem Hebel befestigt ist, der einen seitlichen Anschlag aufweist, der in einem Kontakt mit den Führungen auf dem Schlitten angeordnet ist.

2. Vorrichtung für den Einschluss histologischer und biologischer Proben nach Anspruch 1, **dadurch gekennzeichnet, dass** das Mittel zum Ablegen des Abdeckglases in Form zweier abgefederter schmaler Platten oder Nadeln ausgeführt ist.

3. Vorrichtung für den Einschluss histologischer und biologischer Proben nach Anspruch 1, **dadurch gekennzeichnet, dass** die Länge der abgefederten schmalen Platte oder Feder des Mittels zum Ablegen des Abdeckglases die Breite des Stößels des Abdeckglases um mehr als ein Drittel der Breite des Abdeckglases übersteigt.

4. Vorrichtung für den Einschluss histologischer und biologischer Proben nach Anspruch 1, **dadurch gekennzeichnet, dass** sie im Arbeitsbereich zusätzlich eine Sicherungsfläche für das Objektglas enthält.
